(19) Europäisches Patentamt
European Patent Office
Office européen des brevets

(11) Veröffentlichungsnummer: **0 256 431 B1**

# (12) EUROPÄISCHE PATENTSCHRIFT

(45) Veröffentlichungstag der Patentschrift: **26.06.91**

(51) Int. Cl.$^5$: **G01N 21/53**, B01D 17/05

(21) Anmeldenummer: **87111306.4**

(22) Anmeldetag: **05.08.87**

Die Akte enthält technische Angaben, die nach dem Eingang der Anmeldung eingereicht wurden und die nicht in dieser Patentschrift enthalten sind.

## (54) Verfahren zur Steuerung der Spaltung von Öl-/Wasseremulsionen.

(30) Priorität: **11.08.86 DE 3627199**

(43) Veröffentlichungstag der Anmeldung: **24.02.88 Patentblatt 88/08**

(45) Bekanntmachung des Hinweises auf die Patenterteilung: **26.06.91 Patentblatt 91/26**

(84) Benannte Vertragsstaaten: **AT BE DE FR GB IT NL SE**

(56) Entgegenhaltungen:
**FR-A- 2 266 881**
**US-A- 3 880 526**
**US-A- 4 201 471**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Spei, Brigitte**
**Harffstrasse 129 a**
**W-4000 Düsseldorf 13(DE)**
Erfinder: **Wehle, Volker, Dr.**
**Alsenstrasse 7**
**W-5657 Haan(DE)**

EP 0 256 431 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Steuerung der durch organische Spalter induzierten Spaltung von Öl-/Wasseremulsionen.

Bei der Bearbeitung von metallischen Werkstoffen sehr häufig zum Einsatz kommende Öl-in-Wasser-Emulsionen, wie beispielsweise Kühlschmierstoff-, Tiefzieh-, Scheid- oder Bohremulsionen, deren Ölphase vorweigend aus natürlichen oder synthetischen Ölen unterschiedlicher chemischer Zusammensetzung und Herkunft besteht, unterliegen bei ihrer Anwendung nicht nur einem Verschleiß, sondern werden auch durch Eintrag von Fremdstoffen verunreinigt. Sie müssen daher regelmäßig entsorgt werden. Der wichtigste Schritt in der - unter Umständen kontinuierlich ablaufenden - Entsorgung besteht in der Spaltung der abgearbeiteten Emulsionen; dies bedeutet, daß die Ölphase möglichst weitgehend von der Wasserphase getrennt werden muß, um entweder die abgetrennte Ölphase aufarbeiten und wiederverwerten zu können oder um diese und die ebenfalls abgetrennte Wasserphase ökologisch unbedenklich den üblichen Entsorgungsverfahren zuführen zu können.

Die früher übliche Spaltung derartiger Emulsionen durch Mineralsalze oder Säuren wurde aufgrund der ökologischen Nachteile und der für eine vollständige Spaltung benötigten hohen Spaltermenge sukzessive durch ein Spaltverfahren ersetzt, in dem zur Emulsionsspaltung organische Spalter, in der Regel oberflächenaktive Substanzen, eingesetzt werden. Deren Vorteil ist darin zu sehen, daß die für eine vollständige Spaltung notwendigen Einsatzkonzentrationen sehr niedrig, beispielsweise im Bereich von 0,1 bis 10 % der Emulsionsmenge, liegen und die Spalter die Entsorgung der Ölphase, beispielsweise bei der Verbrennung, nicht beeinträchtigen. Außerdem führen sie zu keiner nennenswerten Fremdstoffbelastung der wäßrigen Phase.

Der anwendungstechnische Nachteil bei der Verwendung organischer Spalter in der Emulsionsspaltung liegt darin, daß eine Überdosierung der für die Spaltung eingesetzten Substanzen zu einer Re-Emulgierung der bereits gespaltenen Emulsion führen kann. Dies hat zur Folge, daß eine Vollständige Emulsionsspaltung nur in einem relativ engen Bereich der Dosierung der Spaltersubstanzen möglich ist. Unterhalb dieses Bereiches ist die Emulsionsspaltung unvollständig, was sich in einem unerwünscht hohen Ölgehalt in der Wasserphase bemerkbar macht, oberhalb dieses Bereiches führt die Überdosierung des Spalters und die damit verbundene Re-Emulgierung ebenfalls zu einem Anstieg des Ölgehaltes in der Wasserphase, der natürlicherweise ebenfalls unerwünscht ist. Eine zusätzliche Erschwernis ist darin zu sehen, daß die in der Praxis anfallenden Öl-in-Wasser Emulsionen hinsichtlich Zusammensetzung, Konzentration der Bestandteile, pH-Wert, Temperatur und anderen Parametern starken Schwankungen unterworfen sein können. Diese Nachteile führen dazu, daß bei der praktischen Verwendung von oberflächenaktiven Substanzen als Emulsionsspalter ständige empirische Überprüfungen der Spaltmittelart und der Spaltmittelmenge notwendig waren, um für jedes Anwendungsproblem den optimalen Dosierbereich für den organischen Spalter zu ermitteln.

In der Praxis wurde der optimale Dosierbereich üblicherweise durch visuelle Beobachtung des Spaltverlaufes bei der Emulsionsspaltung ermittelt. Diese Bestimmung des optimalen Dosierbereichs für den Spalter, d.h. des Endpunktes für die Zugabe der als Spalter, verwendeten oberflächenaktiven Verbindung, wurde in der Regel so vorgenommen, daß so lange Spalter zugegeben wurde, bis sich eine flotierende Öl-/Schlammflocke bildete. Um Überdosierungen zu vermeiden, mußte dies unter Zugabe kleiner Spaltermengen geschehen, weswegen die Spaltung von Öl-/Wasseremulsionen bei visueller Bestimmung des Endpunktes einen Zeitraum von mehreren Stunden in Anspruch nahm.

Zudem bestand aufgrund zunehmender Bestrebungen, derartige Verfahren auf dem Sektor der Abwasserreinigung zu automatisieren, ein steigender Bedarf an wartungsarmen und zuverlässig automatisch arbeitenden Meßverfahren.

Diesem Bedürfnis konnten auch die im Stand der Technik bekannten klassischen Verfahren zur Trübungsmessung, die versuchsweise zur Steuerung der Emulsionsspaltung eingesetzt wurden, bisher nicht gerecht werden. Die in abgearbeiteten Kühlschmierstoff-, Tiefzieh-, Schneid- bzw. Bohremulsionen vorhandenen Verunreinigungen führten - neben den in diesen Emulsionen vorherrschenden sonstigen ungünstigen Bedingungen - zu Fehlmessungen in einer Größenordnung, die für die Praxis nicht akzeptabel waren. Insbesondere führten durch die Öle hervorgerufene Färbungen und größere Emulgator-Demulgator-Aggregate in der wäßrigen Phase immer wieder zu Störungen der Messungen. Praxisgerechte Verfahren zur Bestimmung des optimalen Dosierbereichs für organische Spalter, die in kurzer Zeit zu reproduzierbaren Ergebnissen führten, wurden bisher nicht beschrieben.

Der Erfindung war die Aufgabe gestellt, ein Verfahren zur Steuerung der durch organische Spalter induzierten Spaltung von Öl-/Wasseremulsionen zur Verfügung zu stellen, in dem eine zuverlässige und reproduzierbare Bestimmung des optimalen Dosierbereichs für den organischen Spalter auf automatischem

Wege möglich ist. Das neue Verfahren sollte von Verunreinigungen in den abgearbeiteten Emulsionen unabhängig sein und durch die Farbe der Emulsionen nicht beeinflußt werden. Das neue Verfahren sollte zudem vollautomatisch durchgeführt werden können und eine zuverlässige Bestimmung des Dosier-Endpunktes in Emulsionen der genannten Art mit allen in der Praxis eingesetzten organischen Spaltern ermöglichen.

Gegenstand der FR-A 2 266 881 ist ein Verfahren zur automatischen Überwachung und Steuerung der Ausflockung von in einer Flüssigkeit suspendierten Partikel mittels eines Flockungsmittels. Das Verfahren basiert auf einem optischen System, mit dessen Hilfe die Intensität der Streuung eines monochromatischen Lichtstrahls gemessen wird. Hierbei wird der Lichtstrahl durch eine Zelle geleitet, die von einer Mischung der Flüssigkeit, welche die suspendierten Partikel enthält, und des zudosierten Flockungsmittels durchflossen wird. Mittels photosensitiver Detektoren wird die Intensität des durch die gebildeten Flocken unter einem bestimmten Winkelbereich gestreuten Lichtes in Abhängigkeit von der Menge des zudosierten Flockungsmittels gemessen. Der hier genannte Winkelbereich des Streulichtes (Signal $S_1$), bezogen auf das Durchlicht (Zentralstrahl) liegt zwischen $0{,}025 \cdot \lambda$ rad und $0{,}065 \cdot \lambda$ rad, wobei $\lambda$ die Wellenlänge des Lichtes bedeutet. Für beispielsweise $\lambda = 0{,}6\ \mu m$ resultieren für diesen Winkelbereich Werte zwischen 0,015 rad und 0,039 rad. Das Optimum des Flockungsprozesses ist dann erreicht, wenn die Intensität des gestreuten Lichtes ein Maximum durchläuft. Die über die photosensitiven Detektoren gemessenen Signale dienen mit Hilfe einer elektronischen Steuerung zur optimalen Dosierung des Flockungsmittels, d. h. zur Unterbrechung der Dosierung, sobald das erwähnte Maximum erreicht ist. Das Verfahren dient beispielsweise zur Agglomeration von in Wasser enthaltenen kolloidalen Partikeln, die durch Dekantieren oder Filtrieren nicht entfernt werden können.

Die US-A 3 880 526 betrifft ein Verfahren zur Messung der Trübung einer Flüssigkeit. Hierin wird - als Stand der Technik - ein Verfahren beschrieben, bei welchem der Lichtstrahl einer Wolfram-Lampe durch die Probenflüssigkeit geleitet und das gestreute Licht sowie das Durchlicht, d. h. das nicht gestreute Licht, über Photodetektoren gemessen wird. Aus dem Verhältnis von Durchlicht zu Streulicht läßt sich nach entsprechender elektronischer Verstärkung der Trübungsgrad der Flüssigkeit bestimmen. Für das eigentliche in diesem Patent beschriebene Verfahren dienen zwei parallele Laserstrahlen als Lichtquelle, wobei gleichfalls Durchlicht und Streulicht gemessen werden. Auch die hierbei ermittelten Werte sind proportional dem Trübungsgrad der Flüssigkeit. Das beschriebene Verfahren beziehungsweise die entsprechende Apparatur kann beispielsweise zur Bestimmung des Trübungsgrades von Seewasser, Flußwasser oder Abwässern Verwendung finden.

In der US-A 4 201 471 wird ein System zur Bestimmung der Öl-Konzentration in einem Öl/Wasser-Gemisch beschrieben. Dieses System basiert auf Photozellen, welche sowohl das Durchlicht als auch das Streulicht eines durch eine Probe des Gemisches geleiteten Laser-Lichtstrahles messen. Die gemessenen Signale werden über entsprechende elektronische Geräte verstärkt und miteinander in Beziehung gesetzt. Die so erhaltenen Werte sind proportional der Öl-Konzentration der Probe. Sofern die zu untersuchende Probe Öl enthält, vermindert sich die Intensität des Durchlichtes und diejenige des Streulichtes steigt an, wobei der Anstieg zunächst - bei Ölkonzentrationen bis 200 ppm - linear verläuft und bei höheren Ölkonzentrationen von ca. 300 bis 400 ppm ein Maximum erreicht.

Es wurde nun überraschend gefunden, daß der optimale Dosierbereich für einen organischen Spalter bei der durch organische Spalter induzierten Emulsionsspaltung doch dadurch bestimmt werden kann, daß man den Trübungsverlauf mit einem der klassischen Verfahren zur Trübungsmessung in Abhängigkeit von der Zugabemenge an organischem Spalter mißt und die Trübung als Indikator für die Qualität der Spaltwasserphase heranzieht.

Die Erfindung betrifft ein Verfahren zur Steuerung der durch organische Spalter induzierten Spaltung von Öl-/Wasserermulsionen durch Messung der Trübung der Spaltwasserphase in Abhängigkeit von der zugegebenen Menge an organischen Spaltern, wobei man während der Zugabe des organischen Spalters mit Hilfe einer an sich bekannten apparativen Anordnung, bestehend im Prinzip aus Lichtquelle (1), Probenkammer (2), Detektor (3) für das Durchlicht und Detektor (4) für das vorwärts gestreute Licht,

a) das von der Lichtquelle (1) ausgehende, durch die Probenkammer (2) mit der Probe (5) fallende, nicht absorbierte bzw. nicht gestreute Licht (Durchlicht) mit Hilfe des Detektors (3) für das Durchlicht mißt,

b) gleichzeitig das von der Lichtquelle (1) ausgehende, durch die in der Probe (5) enthaltenen Öltröpfchen gestreute Licht mit Hilfe des Detektors (4) für das vorwärts gestreute Licht mißt,

c) die Meßsignale der Verfahrensschritte (a) und (b) nach Verstärkung ins Verhältnis zueinander setzt, daraus die Trübung errechnet und gegebenenfalls das Ergebnis zur zugegebenen Spaltermenge in Beziehung setzt und graphisch festhält, und

d) die Zugabe an organischen Spaltern dann unterbricht, wenn die Trübung nach dem Maximum ein erstes Minimum erreicht.

Zur Erläuterung der Erfindung dienen die Figuren 1 bis 5. Darin zeigen
Fig. 1 die an sich bekannte apparative Anordnung zur Messung des Streulichtes und
Fig. 2 bis 5 beispielhaft den mit der Apparatur nach Fig. 1 aufgenommenen Trübungsverlauf in Abhängigkeit von der zugegebenen Menge an organischem Spalter.

Die mit dem erfindungsgemäßen Verfahren gespaltenen Emulsionen sind ausnahmslos Öl-in-Wasser Emulsionen, wie sie beispielsweise bei der Bearbeitung von metallischen Werkstoffen anfallen. Diese Emulsionen dienen zum Kühlen der Werkstücke und Werkzeuge bei der spanabhebenden Metallbearbeitung, beispielsweise beim Schneiden, Bohren und Drehen, oder zur Verbesserung des Gleit- und Trennverhaltens bei der spanlosen Metallverarbeitung, beispielsweise beim Tiefziehen. Emulsionen in diesem Sinn sind also abgearbeitete oder für Versuchszwecke auch synthetisch hergestellte Kühlschmierstoff-, Tiefzieh-, Schneid- und/oder Bohremulsionen, wobei auch Emulsionsgemische unter den genannten Begriff fallen. Bei den geschilderten Öl-in-Wasser Emulsionen handelt es sich um wäßrige Systeme, die bis zu 10 % Ölanteile enthalten können; diese entstehen in der Regel durch Fremdeintrag. Unter Emulsionen im oben genannten Sinn werden jedoch auch die klassischen alkalischen neutralen oder sauren Entfettungs-und Reinigungsbäder verstanden, die beispielsweise in der Automobilindustrie bei der Entfettung bzw` Reinigung von Metallblechen anfallen.

Die als organische Spalter verwendeten Verbindungen sind aus dem Stand der Technik bekannt. Als Spalter (Demulgatoren) kommen vorzugsweise kationische Polymere zur Anwendung. Diese weisen vorzugsweise ein Molekulargewicht im Bereich von 50 000 bis 500 000 auf. In der Praxis werden mit Vorteil, d.h. mit guten Spaltergebnissen schon bei kleinen Demulgatorkonzentrationen, Verbindungen auf der Basis von Polyaminen, Polyamidaminen, Polyiminen, Kondensationsprodukten aus o-Toluidin und Formaldehyd, quartären Ammoniumverbindungen und ionogenen Tensiden verwendet. Von diesen sind Polyamine mit einem mittleren Molekulargewicht im Bereich von 75 000 bis 200 000 oder Kondensationsprodukte aus o-Toluidin und Formaldehyd aufgrund der guten Spaltergebnisse schon bei niedrigen Spalterkonzentrationen besonders bevorzugt.

Das erfindungsgemäße Verfahren wird nachstehend unter Einbeziehung der Fig. 1 näher erläutert.

Fig. 1 zeigt skizzenhaft eine an sich bekannte apparative Anordnung, mit der in dem erfindungsgemäßen Verfahren eine Steuerung der durch organische Spalter induzierten Spaltung von Öl-/Wasseremulsionen durch Messung der Trübung der Spaltwasserphase in Abhängigkeit von der zugegebenen Menge an organischem Spalter erreicht werden kann. Wie aus Fig. 1 zu ersehen, ist ein Teil der dargestellten apparativen Anordnung die Lichtquelle 1. Die Lichtquelle 1 kann das gesamte optische Spektrum der Wellenlängen umfassen, also eine sogenannte "weiße" Lichtquelle sein oder auch nur Licht bestimmter Wellenlängenbereiche imitieren. Vorzugsweise besteht die Lichtquelle 1 aus einer weißen Lichtquelle, die von einem geregelten Netzteil mit Strom versorgt wird.

Der Lichtstrahl der Lichtquelle 1 passiert die Probenkammer 2, in der die flüssige Probe 5 enthalten ist, deren durch Spalterzugabe bewirkte Trübung gemessen werden soll. Ein Teil des von der Lichtquelle 1 ausgehenden, durch die Probenkammer 2 fallenden Lichtes wird von den in der Probe 5 enthaltenen Substanzen weder absorbiert noch gestreut. Dieses sogenannte "Durchlicht" wird nach Passieren der Probenkammer 2 mit Hilfe des Detektors 3 für das Durchlicht gemessen. Diese Messung dient sozusagen als Referenzmessung und hat den Vorteil, daß die absorbierten und gestreuten Lichtanteile erfaßt werden können, deren Streuung durch die Grenzfläche zwischen Probenkammer und Flüssigkeit, durch Ablagerungen, Schlieren und Kratzer an der Wand der Probenkammer 2, durch anhaftende Gasbläschen oder durch Färbungen oder Feststoffpartikel in der Probe hervorgerufen werden. Die Erfassung der durch diese Erscheinungen hervorgerufenen Streueffekte ermöglicht eine Korrektur der Streulichtmeßwerte, deren Messung nachfolgend beschrieben wird.

Bei der Spaltung sowohl frischer, d. h. für experimentelle Zwecke hergestellter Öl-/Wasseremulsionen als auch in der Praxis anfallender abgearbeiteter Öl-/Wasseremulsionen tritt bei der Zugabe eines organischen Spalters eine Zunahme der Trübung der Emulsion auf. Die Zunahme der Trübung ist darauf zurückzuführen, daß sich in der Spaltwasserphase Aggregate zwischen den organischen Anionen des Emulgators und den vorzugsweise kationischen Polymerionen des Spalters bzw. Demulgators bilden. An diesen makromolekularen Aggregaten wird das von der Lichtquelle 1 ausgehende, durch die Probe 5 fallende Licht gestreut. Bei hoher Emulgator-bzw. Demulgatorkonzentration kann auch makroskopisch eine Trübung der Spaltwasserphase beobachtet werden. Bei weiterer Zugabe von organischen Spaltmitteln geht die Trübung rapide zurück. Dies beruht auf einem Koaleszieren der nunmehr in der wäßrigen Phase nicht mehr emulgierten Öltröpfchen und der damit verbundenen Abnahme der Gesamtzahl der Ölpartikel. Auch makroskopisch kann bei höheren Konzentrationen ein Rückgang der Trübung beobachtet werden.

Erfindungsgemäß wird nun gleichzeitig mit der Messung des Durchlichts auch das Licht gemessen, das durch die in der Probe 5 enthaltenen Öltröpfchen vorwärts gestreut wird. Der bevorzugte Streuwinkel für die

Messung des Streulichtes liegt bei 12°.

Die in dem erfindungsgemäßen Verfahren verwendeten Detektoren 3 bzw. 4 für das Durchlicht bzw. das vorwärts gestreute Licht sind an sich bekannte und für diese Zwecke im Stand der Technik beschriebene Detektoren. Beispielsweise können als Detektoren Silicium-Photodioden verwendet werden, auf denen durch das Durchlicht bzw. das vorwärts gestreute Licht niedrige Ströme geliefert werden, die proportional zur Menge des Lichtes sind, das auf diese Dioden auftrifft. In dem erfindungsgemäßen Verfahren werden die an den jeweiligen Detektoren 3 bis 4 erzeugten Stromsignale nach Verstärkung ins Verhältnis zueinander gesetzt. Die danach auf elektronischem Wege erhaltenen Ergebnisse können gegebenenfalls zur zugegebenen Spaltermenge in Beziehung gesetzt und auf einem Schreiber graphisch festgehalten werden. Die gegebenenfalls erfolgende graphische Niederschrift kann zur späteren Kontrolle des Spaltvorganges herangezogen werden.

In einer bevorzugten Ausführungsform des erfindungsgemäßen Verfahrens wird jedoch das aus dem Verhältnis der beiden Meßsignale sich errechnende Ergebnis dazu verwendet, die Zugabe an organischem Spalter automatisch zu unterbrechen. Dies geschieht erfindungsgemäß dann, wenn die Trübung, die auf der Bildung der Aggregate zwischen Emulgator-Anion und Demulgator-Kation beruht, von dem Rückgang der Trübung überlagert wird, der durch das Koaleszieren der nicht mehr emulgierten Öltröpfchen hervorgerufen wird. Infolge der Überlagerung von Trübungszunahme und Trübungsabnahme resultiert in der Praxis ein Trübungsmaximum, dem bei weiterer Zugabe von organischem Spalter ein erstes Trübungsminimum folgt. Dieses Trübungsminimum ergibt sich dadurch, daß die Trübungsabnahme in der Emulsion durch eine erneute Zunahme der Trübung überlagert wird, die daraus resultiert, daß die koaleszierten Öltröpfchen wieder re-emulgiert werden, sich folglich die Teilchenzahl und damit auch die gemessene Trübung erhöht. Da eine Re-Emulgation der Öltröpfchen nicht erwünscht ist, muß die Zugabe des organischen Spalters vor dem Beginn der Re-Emulgation, d.h. beim ersten Minimum der Trübungskurve, unterbrochen werden. Die zum Zeitpunkt des gemessenen Trübungsminimums zugegebene Spaltermenge entspricht genau der für eine vollständige Spaltung der Emulsion erforderlichen Menge an organischem Spalter, da genau an diesem Punkt die zugegebene Spaltermenge der ursprünglich in der Emulsion vorhandenen Emulgatormenge entspricht und so eine annähernd vollständige Spaltung der Emulsion erreicht werden kann.

Wie oben ausgeführt, kann entweder das Verhältnis der aus Durchlicht und Streulicht erhaltenen Meßsignale unmittelbar dazu verwendet werden, die Zugabe an organischem Spalter dann zu unterbrechen, wenn die Trübung nach dem Maximum ein erstes Minimum erreicht hat.

Es ist jedoch in einer weiteren Ausführungsform der Erfindung auch möglich, die Zugabemenge an organischem Spalter manuell zu unterbrechen, wenn die mit Hilfe eines Schreibers niedergeschriebene Kurve, die den Trübungsverlauf in Abhängigkeit der zugegebenen Spaltermenge wiedergibt, nach dem Trübungsmaximum ein erstes Minimum erreicht.

Das erfindungsgemäße Verfahren zur Steuerung der durch organische Spalter induzierten Spaltung der Öl-/Wasseremulsionen, insbesondere die Bestimmung der für eine vollständige Spaltung erforderlichen optimalen Spaltermenge durch Messung der Trübung der Spaltwasserphase in Abhängigkeit von der zugegebenen Menge an organischem Spalter gemäß der vorliegenden Erfindung hat gegenüber den aus dem Stand der Technik bekannten Verfahren den Vorteil, daß eine Störung der "Endpunkt"-Bestimmung durch Färbungen in der Emulsion bzw. durch größere Aggregate bzw. Partikel in der Emulsion nicht erfolgt. In einfacher, genauer und reproduzierbarer Weise kann die optimale, für eine vollständige Spaltung der Emulsion erforderliche Spaltermenge dadurch bestimmt werden, daß man das erste Trübungsminimum nach dem Maximum der Trübung in der Emulsion bestimmt und an dieser Stelle die Zugabe an organischem Spalter manuell oder vollautomatisch unterbricht. Das erfindungsgemäße Verfahren ermöglicht daher nicht nur eine vollautomatische Bestimmung der optimalen Spaltermenge, sonder ermöglicht es auch, die Zudosierung des organischen Spalters kontinuierlich automatisch zu steuern. Sie ist damit den Verfahren aus dem Stand der Technik schon durch den Wegfall der empirischen Endpunkt-Bestimmung überlegen. Außerdem wird durch leicht meßbare und mit dem erfindungsgemäßen Verfahren einfach zugängliche Parameter eine viel genauere Bestimmung der optimalen Spaltermenge möglich. Dadurch läßt sich eine Überdosierung des Spalters, wie sie im Stand der Technik immer wieder beobachtet wurde, zuverlässig vermeiden.

Die Erfindung wird durch die nachfolgenden Beispiele näher erläutert.

Als Richtwert für das Ergebnis der erzielten Emulsionsspaltung diente der Restölgehalt in der Spaltwasserphase. Nach DIN 38409 H 17/H 18 wurden die in der Spaltwasserphase enthaltenen petrolextrahierbaren Stoffe (PE) bestimmt. Die Versuchsanordnung war dabei die folgende:
Ein 1-l-Becherglas wurde jeweils mit 600 ml der zu spaltenden Emulsion befüllt und mit Hilfe eines Magnetrührers kontinuierlich bei 500 Upm gerührt. Die Länge des Rührstäbchens betrug 50 mm.

Als Meßgerät zur Messung der Trübung diente ein Eintauch-Konzentrationsmesser, Modell 25/34, der

Firma Monitek (eingetragenes Warenzeichen).

Der Meßwertaufnehmer, Typ 25 (Tauchsonde), wurde an einem Stativ befestigt. Die Eintauchtiefe der Sonde wurde justiert, d.h. alle Messungen wurden bei gleicher Eintauchtiefe der Tauchsonde vorgenommen.

Der Trübungsmesser war mit einem Schreiber zur Aufnahme der Meßwerte (Trübung gegen zugegebene Spaltermenge) verbunden. Bei konstanter Rührgeschwindigkeit des Magnetrührers wurde der jeweilige organische Spalter tropfenweise in vorgegebenen Zeitintervallen oder in kontinuierlichem, langsamen Fluß zudosiert.

Von der unbehandelten, d.h. noch nicht gespaltenen Emulsion sowie zur Kontrolle der einzelnen Spaltwasserphasen wurden Proben entnommen. In den Spaltwasserphasen wurden nach jeweils 30 min Standzeit die petroletherlöslichen Anteile (PE) nach der oben angegebenen DIN-Vorschrift bestimmt.

Beispiel 1

Eine mineralölhaltige, wassermischbare Kühlschmierstoff-Emulsion für die Zerspanung von Stahl und Gußeisen wurde mit der oben beschriebenen Versuchsanordnung gespalten. Als Spalter wurde ein Polyamin der allgemeinen Formel

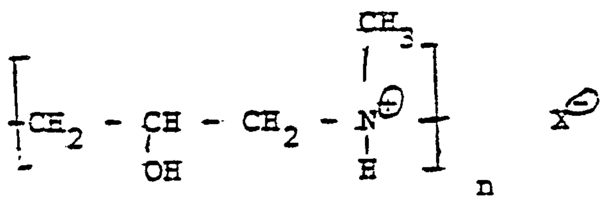

mit einem mittleren Molekulargewicht von 0,1 . $10^6$ verwendet. Die Parameter der Versuchsdurchführung waren die folgenden:

pH-Wert der unbehandelten Emulsion : 9,1;

PE-Gehalt der unbehandelten Emulsion: 11 900 mg/l;

zudosierte Spaltermenge: 0,02 bis 1 Vol.-% ≙ 0,02 bis 1,14 Gew.-%;

Zudosierung des Spalters: tropfenweise mittels Pipette in Abständen von je 30 sec.

Die von einem Schreiber mit einem Papiervorschub von 10 mm/min über die Gesamtdauer des Versuches von 14 min aufgenommene Kurve ist in Fig. 2 wiedergegeben.

Die nachstehende Tabelle 1 zu Fig. 2 zeigt die Menge an petroletherlöslichen Stoffen (PE) in Abhängigkeit von der zugegebenen Menge an Spalter (Produktzugabe):

Tabelle 1 zu Fig. 2

| Produktzugabe (Vol.-%) | Petroletherlösliche Stoffe (PE) (mg/l) |
|---|---|
| - | 11.900 |
| 0,06 | 7.700 |
| 0,12 | 2.408 |
| 0,16 | 2.100 |
| 0,20 | 1.600 |
| 1.00 | 2.000 |

Ergebnis:

Im Anstieg der Kurve ist deutlich die Stufenfunktion erkennbar, die durch die stoßweise Dosierung des organischen Spalters hervorgerufen wird. Im Bereich von 0,1 Vol.-% Spalterzugabe liegt das Maximum der Trübung, die bei einer Dosierung von 0,12 Vol.-% des Spalters rapide abfällt. Die stark abfallende Trübungskurve geht dabei in eine Kurve mit leicht ansteigender Resttrübung über; auch bei sehr hoher Zudosierung des Spalters (bis 1 Vol.-%) ist ein weiterer starker Anstieg der Kurve nicht erkennbar.

Die Messungen des Restölgehaltes (ermittelt als PE-Wert) in der Spaltwasserphase zeigen, daß bei einer zudosierten Spaltermenge von 0,2 Vol.-% der PE-Gehalt mit 1600 mg/l am niedrigsten ist. Das Optimum der zugegebenen Spaltermenge liegt somit im Bereich des ersten Trübungsminimums nach dem Maximum der Trübung der Emulsion.

Beispiel 2

Eine mineralölhaltige, abgearbeitete Tiefziehemulsion aus der Aluminiumdosen-Fabrikation wurde mit Hilfe der oben beschriebenen Versuchsanordnung gespalten. Als Spalter wurde ein Polyamin der allgemeinen Formel

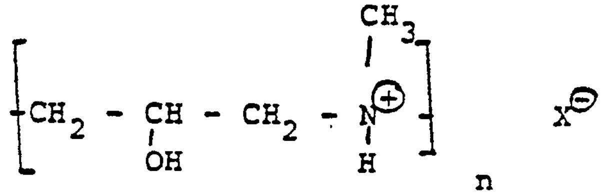

mit einem mittleren Molekulargewicht von 0,15 . $10^6$ verwendet. Der pH-Wert der unbehandelten Emulsion lag bei 8,5; der PE-Gehalt der unbehandelten Emulsion wurde zu 39 510 mg/l ermittelt. Der Spalter wurde in Mengen von 0,02 bis 0,2 Vol.-%, entsprechend 0,02 bis 0,23 Gew.-%, zudosiert; die Zudosierung erfolgte tropfenweise mittels einer Pipette in Abständen von je 30 sec. Die sonstigen Parameter der Durchführung entsprachen den in Beispiel 1 angegebenen Parametern.

Die gemessene Trübung in Abhängigkeit von der Spaltermenge ist der Kurve in Fig. 3 zu entnehmen.

Die nachstehende Tabelle 2 zu Fig. 3 zeigt die Menge an petroletherlöslichen Stoffen (PE) in Abhängigkeit von der zugegebenen Menge an Spalter (Produktzugabe):

Tabelle 2 zu Fig. 3

| Produktzugabe (Vol.-%) | Petroletherlösliche Stoffe (PE) (mg/l) |
|---|---|
| - | 39.510 |
| 0,12 | 400 |
| 0,16 | 164 |
| 0,18 | 108 |
| 0,20 | 170 |

Ergebnis:

Der Anstieg der Trübungskurve zeigt auch im vorliegenden Beispiel deutlich die Stufenfunktion. Bei einer zudosierten Spaltermenge von 0,1 Vol.-% ist das Maximum der Trübung zu erkennen. Ab einer zudosierten Spaltermenge von 0,12 Vol.-% fällt die Trübungskurve steil ab. Die Trübungskurve zeigt ab einer Dosiermenge von 0,18 Vol.-% eine immer geringer werdende Differenz der Trübungsabnahme; ab einer zugegebenen Spaltermenge von 0,2 Vol-% ist eine Änderung der Trübung praktisch nicht mehr erkennbar.

Die zur Kontrolle ermittelten PE-Werte zeigen, daß (bei PE-Werten von 164 bis 106 mg/l) das Optimum der Spaltung im Bereich der zudosierten Spaltermenge von 0,16 bis 0,18 Vol.-% liegt. Dies stimmt im wesentlichen mit dem graphisch ermittelten Dosieroptimum überein.

Beispiel 3

Mit der oben beschriebenen Versuchsanordnung wurde ein abgearbeitetes Entfettungsbad, das ursprünglich zur Reinigung von Stahlteilen eingesetzt war und anionische und nichtionische Tenside enthielt, mittels eines Kondensationsproduktes aus o-Toluidin und Formaldehyd mit einem mittleren Molekulargewicht von ca. 50 000 gespalten. Der pH-Wert der Emulsion betrug von der Spaltung 6,4. Nachdem Fremdöle abgeskimt worden waren, wurde der PE-Gehalt der unbehandelten Emulsion zu 3134 mg/l bestimmt. Der Spalter wurde in Mengen von 0,08 bis 2,5 Vol.-%, entsprechend 0,1 bis 3,05 Gew.-%, zudosiert. Die Dosierung erfolgte kontinuierlich tropfenweise mittels einer Pipette.

Die Ergebnisse der Trübungsmessung sind Fig. 4 zu entnehmen.

Die nachstehende Tabelle 3 zu Fig. 4 zeigt die Menge an petroletherlöslichen Stoffen (PE) in Abhängigkeit von der zugegebenen Menge an Spalter (Produktzugabe):

Tabelle 3 zu Fig. 4

| Produktzugabe (Vol.-%) | Petroletherlösliche Stoffe (PE) (mg/l) |
|---|---|
| - | 3.134 |
| 0,25 | 361 |
| 0,33 | 150 |
| 0,40 | 119 |
| 0,50 | 90 |
| 1,00 | 84 |
| 2,00 | 78 |
| 2.33 | 68 |

Ergebnis:

In der in Fig. 4 abgebildeten Kurve ist die stetige Zunahme der Trübung bei Zudosierung des organischen Spalters erkennbar. Bei einer Spaltermenge von 1,5 Vol.-% ist das Maximum der Trübung erreicht. Die weitere Zugabe von organischem Spalter führt zu einem stufenweisen Rückgang der Trübung, erkennbar in einem Absinken des Kurvenverlaufs. Bei einer zudosierten Spaltermenge von 2,33 Vol.-% ist ein Minimum der Trübung erreicht, weitere Spalterzugabe führte zu einem geringfügigen Anstieg der Trübungskurve. In diesem Bereich ist also das Optimum der Spalterzugabe zu sehen. Eine weitere Zugabe von Spalter führt nicht mehr zu einer nennenswerten Änderung der Resttrübung.

Die zur Kontrolle durchgeführte Bestimmung des PE-Wertes ergab bei zudosierter Spaltermenge von 2,33 Vol.-% (siehe oben) ein Minimum des PE-Wertes von 68 mg/l. Das Ergebnis entsprach somit dem graphisch ermittelten Optimum der Spalterzugabe.

Vergleichsbeispiel

Eine Mischung aus diversen abgearbeiteten Entfettungsbädern und Kühlschmierstoff-Konzentraten aus der Metalloberflächenbehandlung eines Automobilwerkes mit einem pH-Wert von 8,7 und einem PE-Gehalt der unbehandelten Emulsion von 8000 mg/l (nach abskimmen des Fremdöles) wurde mittels eines

Polyamins der allgemeinen Formel

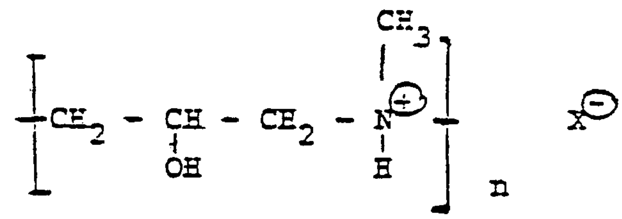

(mittleres Molekulargewicht: ca. 75 000) gespalten. Der organische Spalter wurde in Mengen von 0,02 bis 0,7 Vol.-% (entsprechend 0,02 bis 0,8 Gew.-% tropfenweise mittels einer Pipette zudosiert. Die sonstigen Parameter entsprachen den in den Beispielen 1 bis 3 beschriebenen. Der Endpunkt der Spalterzugabe wurde einerseits mittels des erfindungsgemäßen Verfahrens, andererseits visuell bestimmt.

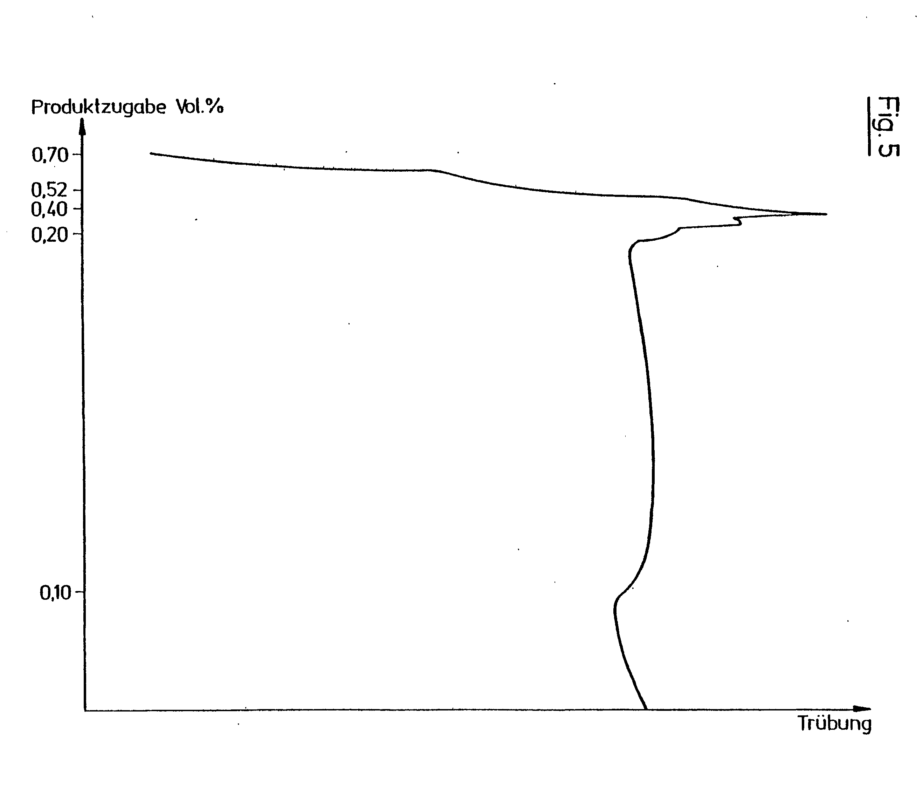

Das Ergebnis der Trübungsmessung ist Fig. 5 zu entnehmen.

Die nachstehende Tabelle 4 zu Fig. 5 zeigt die Menge an petroletherlöslichen Stoffen (PE) in Abhängigkeit von der zugegebenen Menge an Spalter (Produktzugabe):

<u>Tabelle 4 zu Fig. 5</u>

| Produktzugabe (Vol.-%) | Petroletherlösliche Stoffe (PE) (mg/l) |
|---|---|
| - | 8.000 |
| 0,1 | 7.000 |
| 0,2 | 150 |
| 0,52 | 80 |
| 0,7 | 150 |

<u>Ergebnis:</u>

Bei der visuellen Bestimmung der optimalen Spalterzugabe wurde der Endpunkt bei einer zudosierten Spaltermenge von 0,7 Vol.-% erreicht. Es bildete sich eine flotierende Öl-/Schlammflocke. Nach 30 min Standzeit wurde der PE-Gehalt der Spaltwasserphase mit 150 mg/l bestimmt.

Wie der Kurve in Fig. 5 zu entnehmen ist, läßt sich (in Analogie zu den Beispielen 1 bis 3) die erforderliche optimale Spaltermenge mit 0,52 Vol.% ermitteln. Der zur Kontrolle bestimmte PE-Gehalt in der Reinwasserphase, ebenfalls nach einer Standzeit von 30 min bestimmt, lag bei 80 mg/l.

Daraus ist zu folgern, daß bei der visuellen Beurteilung der optimalen Spalterkonzentration der "Endpunkt" bereits überschritten und eine Reemulgierung der Emulsion eingetreten war, so daß ein Teil des Öles wieder in der Spaltwasserphase emulgiert wurde.

Ergänzend ist zu erwähnen, daß das Verfahren zur visuellen Endpunktbestimmung sich über einen Zeitraum von zwei Tagen erstreckt. Entsprechendes gilt für die Bestimmung des PE-Gehaltes. Demgegenüber kann eine Bestimmung der optimalen Spalterkonzentration mit Hilfe der Trübungsmessung in einem Zeitraum von 30 bis 60 Sekunden erfolgen.

**Ansprüche**

1. Verfahren zur Steuerung der durch organische Spalter induzierten Spaltung von Öl-/Wasseremulsionen durch Messung der Trübung der Spaltwasserphase in Abhängigkeit von der zugegebenen Menge an organischen Spaltern, wobei man während der Zugabe des organischen Spalters mit Hilfe einer an sich

bekannten apparativen Anordnung, bestehend im Prinzip aus Lichtquelle (1), Probenkammer (2), Detektor (3) für das Durchlicht und Detektor (4) für das vorwärts gestreute Licht,

a) das von der Lichtquelle (1) ausgehende, durch die Probenkammer (2) mit der Probe (5) fallende, nicht absorbierte bzw. nicht gestreute Licht (Durchlicht) mit Hilfe des Detektors (3) für das Durchlicht mißt,

b) gleichzeitig das von der Lichtquelle (1) ausgehende, durch die in der Probe (5) enthaltenen Öltröpfchen gestreute Licht mit Hilfe des Detektors (4) für das vorwärts gestreute Licht mißt,

c) die Meßsignale der Verfahrensschritte (a) und (b) nach Verstärkung ins Verhältnis zueinander setzt, daraus die Trübung errechnet und gegebenenfalls das Ergebnis zur zugegebenen Spaltermenge in Beziehung setzt und graphisch festhält, und

d) die Zugabe an organischen Spaltern dann unterbricht, wenn die Trübung nach dem Maximum ein erstes Minimum erreicht.

2. Verfahren nach Anspruch 1, dadurch gekennzeichnet, daß man als Lichtquelle (1) eine weiße Lichtquelle verwendet.

3. Verfahren nach Ansprüchen 1 und 2, dadurch gekennzeichnet, daß man als Detektoren (3) und (4) Siliciumphotodioden verwendet.

4. Verfahren nach Ansprüchen 1 bis 3, dadurch gekennzeichnet, daß man das von der Lichtquelle (1) ausgehende, durch die in der Probe (5) enthaltenen Öltröpfchen vorwärts mit einem Streuwinkel von 12 ° gestreute Licht mit Hilfe des Detektors (4) für das vorwärts gestreute Licht mißt.

5. Verfahren nach Ansprüchen 1 bis 4, dadurch gekennzeichnet, daß man die erhaltenen Meßsignale zur automatischen Steuerung bzw. Unterbrechung der Spalterzugabe verwendet.

## Claims

1. A process for controlling the breaking of oil-in-water emulsions induced by organic breakers by measurement of the turbidity of the broken water phase as a function of the quantity of organic breaker added, in which - using an arrangement known per se consisting in principle of a light source (1), a sample chamber (2), a detector (3) for transmitted light and a detector (4) for the light scattered forwards -

a) the unabsorbed light or non-scattered light (transmitted light) emanating from the light source (1) and falling through the sample chamber (2) containing the sample (5) is measured by means of the detector (3) for transmitted light,

b) at the same time, the light emanating from the light source (1) and scattered forwards by the oil droplets in the sample (5) is measured by means of the detector (4) for the light scattered forwards,

c) the measurement signals of steps (a) and (b) are placed in a ratio to one another after amplification, the turbidity is calculated therefrom and the result is optionally related to the quantity of breaker added and graphically recorded and

d) the addition of organic breakers is interrupted when the turbidity reaches a first minimum after the maximum,

the above steps being carried out during addition of the organic breaker.

2. A process as claimed in claim 1, characterized in that a white light source is used as the light source (1).

3. A process as claimed in claims 1 and 2, characterized in that silicon photodiodes are used as the detectors (3) and (4).

4. A process as claimed in claims 1 to 3, characterized in that the light from the light source (1) scattered forwards at a scattering angle of 12° by the oil droplets in the sample (5) is measured by means of the detector (4) for the light scattered forwards.

5. A process as claimed in claims 1 to 4, characterized in that the measurement signals obtained are used for automatically controlling or interrupting addition of the breaker.

## Revendications

1. Procédé de commande de la rupture induite par des agents de rupture organiques d'émulsions huile dans l'eau par mesure de la turbidité de la phase aqueuse séparée en fonction de la quantité d'agents de rupture organiques ajoutée, par lequel, pendant l'ajout de l'agent de rupture organique à l'aide d'une disposition d'appareils connue en soi composée en principe d'une source de lumière (1) d'une chambre d'échantillons (2), d'un détecteur (3) pour la lumière transmise et d'un détecteur (4) pour la lumière dispersée vers l'avant,
   a) la lumière non absorbée ou non dispersée provenant de la source de lumière (1) et traversant la chambre d'échantillon (2) avec l'échantillon (5) (lumière transmise) est mesurée à l'aide du détecteur (3) pour la lumière transmise,
   b) la lumière provenant de la source de lumière (1) dispersée par les gouttelettes d'huile contenues dans l'échantillon (5) est mesurée simultanément à l'aide du détecteur (4) pour la lumière dispersée vers l'avant,
   c) les signaux de mesure des étapes (a) et (b) du procédé sont comparés après amplification, la turbidité est calculée à partir de cette comparaison, et le résultat est éventuellement mis en rapport avec la quantité d'agent de rupture ajoutée et un graphique en est dressé et
   d) l'addition d'agents de rupture organiques est interrompue une fois que la turbidité atteint un premier minimum après le maximum.

2. Procédé selon la revendication 1, caractérisé en ce qu'on utilise comme source de lumière (1) une source de lumière blanche.

3. Procédé selon les revendications 1 et 2, caractérisé en ce qu'on utilise comme détecteurs (3) et (4) des photodiodes au silicium.

4. Procédé selon les revendications 1 à 3, caractérisé en ce qu'on mesure la lumière provenant de la source de lumière (1) dispersée vers l'avant dans un angle de 12° par les gouttelettes d'huiles contenues dans l'échantillon (5) à l'aide du détecteur (4) pour la lumière dispersée vers l'avant.

5. Procédé selon les revendications 1 à 4, caractérisé en ce qu'on utilise les signaux de mesure obtenus pour la commande ou l'interruption automatiques de l'addition d'agent de rupture.

Fig. 1

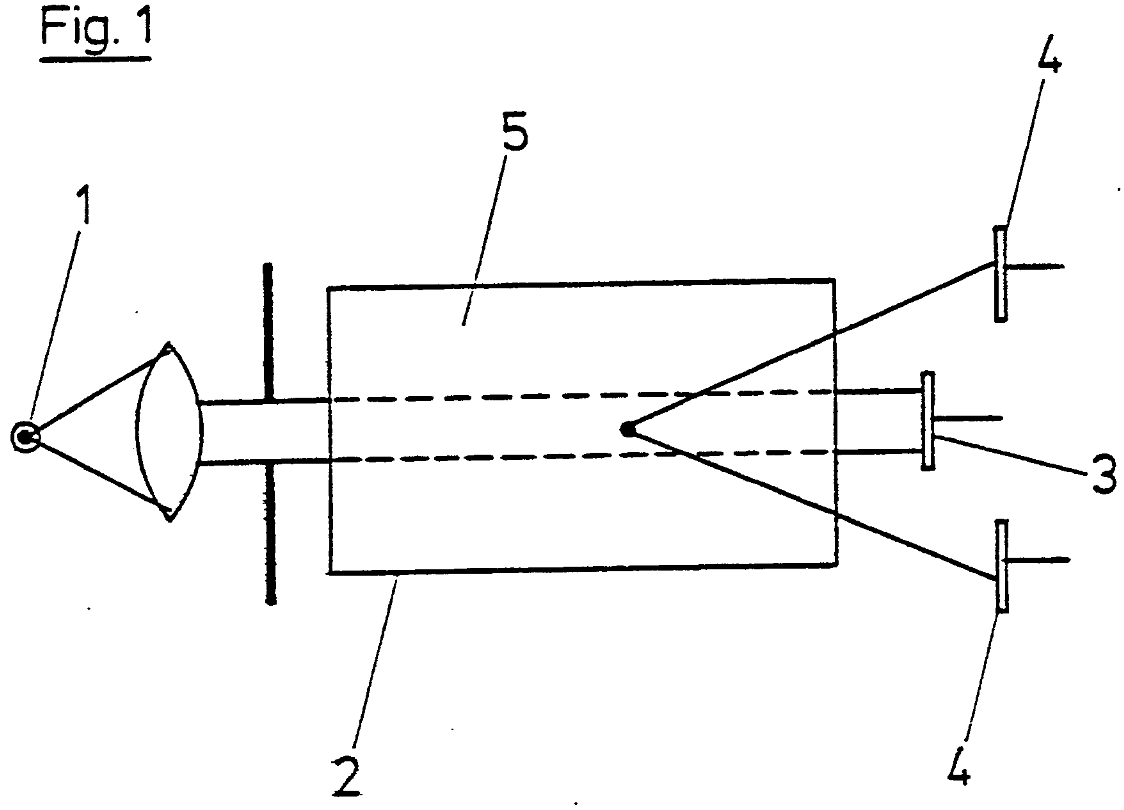

Fig.2

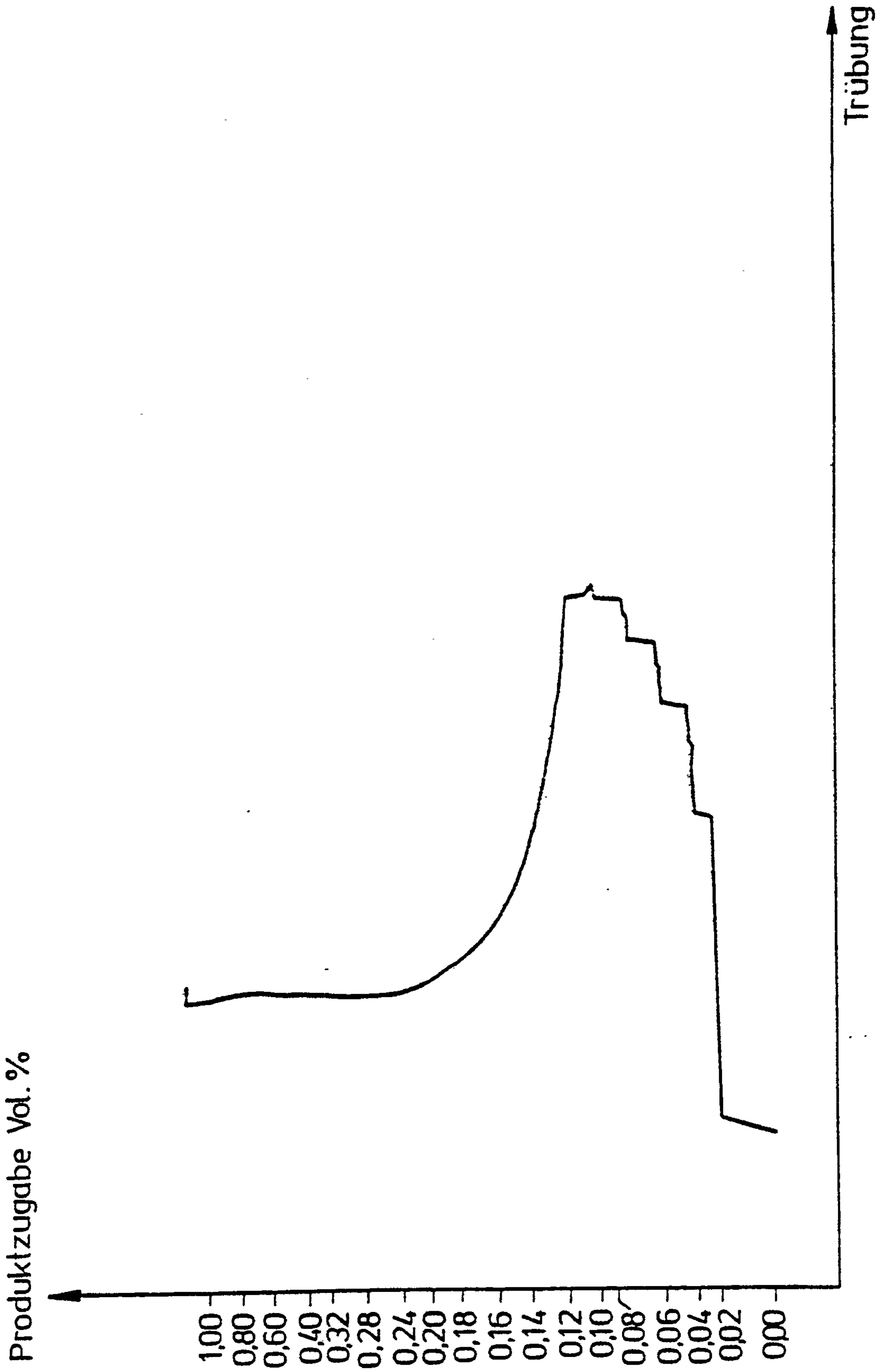
Trübung
Produktzugabe Vol. %
1,00 0,80 0,60 0,40 0,32 0,28 0,24 0,20 0,18 0,16 0,14 0,12 0,10 0,08 0,06 0,04 0,02 0,00

Fig. 3

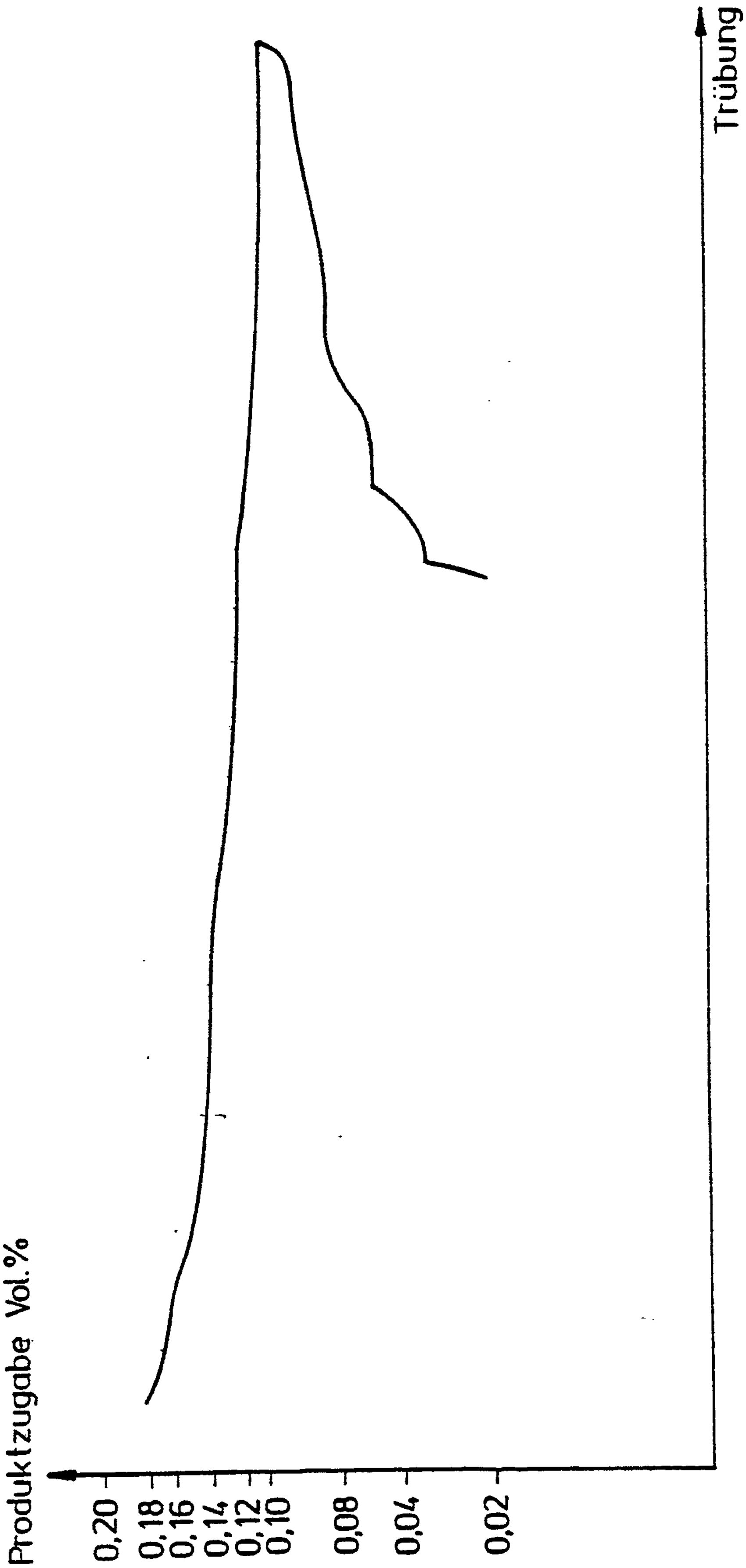
Trübung
Produktzugabe Vol.%
0,20
0,18
0,16
0,14
0,12
0,10
0,08
0,04
0,02

Fig. 4

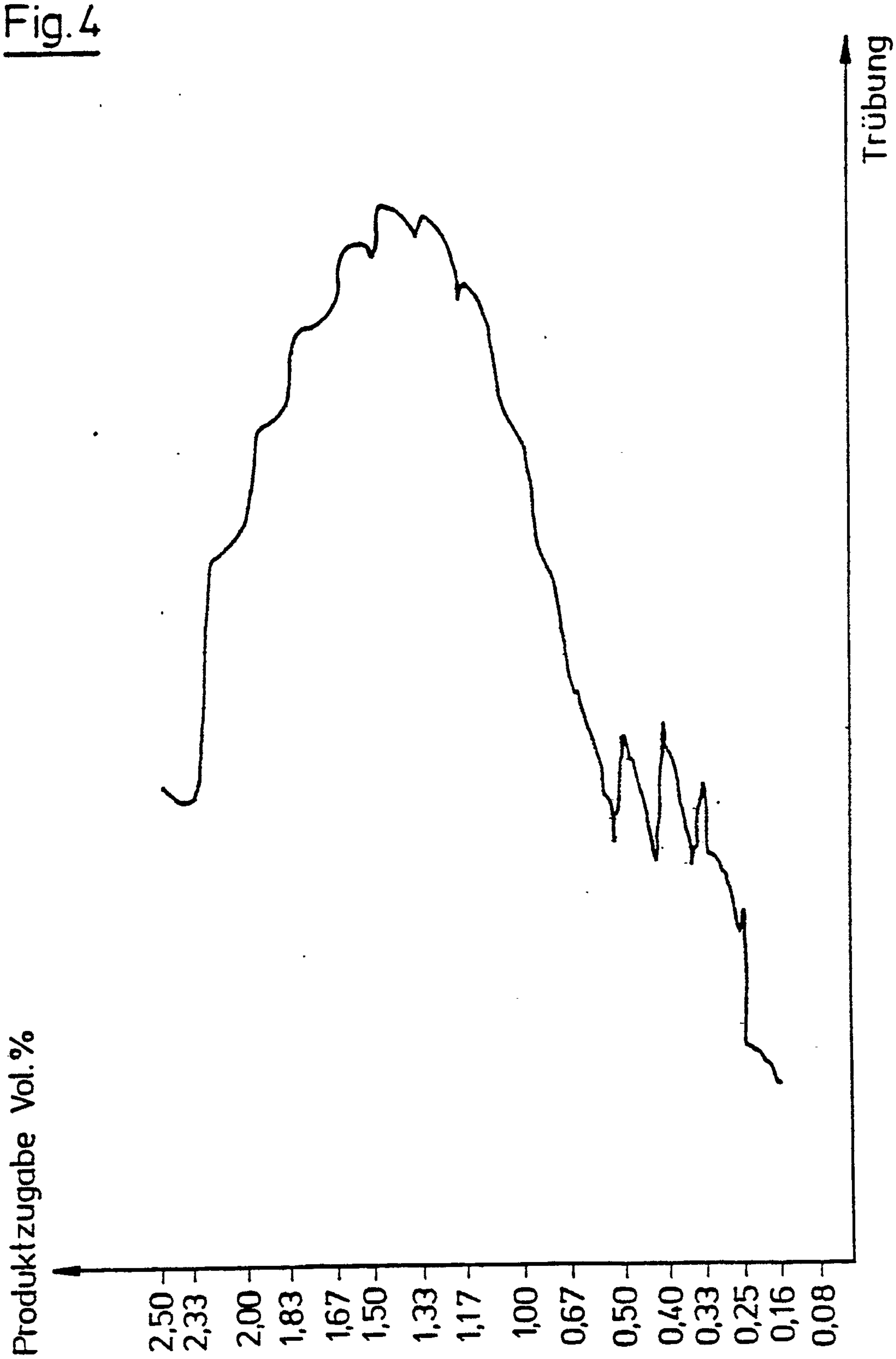
Trübung
Produktzugabe Vol. %
2,50
2,33
2,00
1,83
1,67
1,50
1,33
1,17
1,00
0,67
0,50
0,40
0,33
0,25
0,16
0,08

Fig. 5